(19) Europäisches Patentamt

European Patent Office

Office européen des brevets

(11) EP 0 885 508 B1

(12) **FASCICULE DE BREVET EUROPEEN**

(45) Date de publication et mention
de la délivrance du brevet:
**29.05.2002 Bulletin 2002/22**

(21) Numéro de dépôt: **97908323.5**

(22) Date de dépôt: **07.03.1997**

(51) Int Cl.⁷: **H04L 12/56**, H04Q 11/04

(86) Numéro de dépôt international:
**PCT/FR97/00410**

(87) Numéro de publication internationale:
**WO 97/33411 (12.09.1997 Gazette 1997/39)**

(54) **PROCEDE D'ESPACEMENT DE CELLULES ATM ET DISPOSITIF POUR SA MISE EN OEUVRE**

VERFAHREN ZUR POSITIONIERUNG VON ATM-ZELLEN UND ANLAGE ZU DESSEN
DURCHFÜHRUNG

ATM CELL SPACING METHOD AND DEVICE THEREFOR

(84) Etats contractants désignés:
**DE FR GB IT SE**

(30) Priorité: **08.03.1996 FR 9602963**

(43) Date de publication de la demande:
**23.12.1998 Bulletin 1998/52**

(73) Titulaire: **Thales**
**75008 Paris (FR)**

(72) Inventeurs:
• **MOUEN-MAKOUA, David, Thomson-CSF S.C.P.I.**
**F-94117 Arcueil Cédex (FR)**
• **DUMAS, Pierre, Thomson-CSF S.C.P.I.**
**F-94117 Arcueil Cédex (FR)**

(74) Mandataire: **Lincot, Georges et al**
**THOMSON-CSF,**
**Propriété Intellectuelle,**
**Département Protection et Conseil,**
**TPI/PC,**
**13, av. du Prés. Salvador Allende**
**94117 Arcueil Cédex (FR)**

(56) Documents cités:
**EP-A- 0 596 159**

• **ISS '95. WORLD TELECOMMUNICATIONS
CONGRESS. (INTERNATIONAL SWITCHIN
SYMPOSIUM), ADVANCED SWITCHING
TECHNOLOGIES FOR UNIVERSAL
TELECOMMUNICATIONS AT THE BEGINNING
OF THE 21ST. CENTURY BERLIN, APR. 23 - 28,
1995, vol. 1, 23 avril 1995, VERBAND
DEUTSCHER ELEKTROTECHNIKER (VDE) ET
AL, pages 457-461, XP000495613 BOYER P ET
AL: "A SPACER-MULTIPLEXER FOR PUBLIC
UNIS"**
• **COMPUTER COMMUNICATIONS REVIEW, vol.
24, no. 4, 1 octobre 1994, pages 101-114,
XP000477044 KUNG H T ET AL: "CREDIT-BASED
FLOW CONTROL FOR ATM NETWORKS:
CREDIT UPDATE PROTOCOL, ADAPTIVE
CREDIT ALLOCATION, AND STATISTICAL
MULTIPLEXING"**
• **IEICE TRANSACTIONS ON COMMUNICATIONS,
vol. E79-B, no. 1, 1 janvier 1996, pages 8-16,
XP000556188 KUO F -J ET AL: "DESIGN OF
MULTI-CONNECTION SHAPER AND ENFORCER
FOR USAGE PARAMETER CONTROL IN ATM
NETWORKS"**

**Description**

La présente invention concerne un procédé d'espacement de cellules ATM multiplexant plusieurs trafics de profils variés et concerne également un dispositif pour sa mise en oeuvre.

L'invention s'applique à la gestion des ressources dans les réseaux ATM, et plus précisément au lissage appelé "shaping" en terminologie anglo-saxonne, du trafic émis par une source ATM.

La source qui injecte des cellules dans un réseau ATM peut être un usager ATM (accès UNI, abréviation anglo-saxonne pour "User Network Interface") ou un point de raccordement entre deux réseaux ATM (NNI, abréviation anglo-saxonne pour "Network Network Interface" ou PUNI, abréviation anglo-saxonne pour "Public User Network Interface").

Les sources lissent le trafic qu'elles émettent avec obligation de respecter un contrat de conformité basé sur un algorithme spécifique : l'Algorithme d'Espacement Virtuel ou GCRA, abréviation anglo-saxonne pour "Generic Cell Rate Algorithm" dont une définition est donnée par la Recommandation I.371 de l'IUT-T (Union Internationale des Télécommunications, Section des Télécommunications).

Cet algorithme permet de prendre en compte deux profils types de trafic : le trafic à débit constant CBR, abréviation anglo-saxonne pour "Constant Bit Rate" et le trafic à débit variable VBR, abréviation anglo-saxonne pour "Variable Bit Rate". Il s'appuie sur deux paramètres : le débit crête et le débit moyen.

Le débit crête est déterminé par le paramètre PCR, abréviation anglo-saxonne pour "Peak Cell Rate", exprimé en cellules par secondes et le débit moyen est déterminé par les paramètres PCR et SCR, abréviation anglo-saxonne pour "Sustainable Cell Rate", exprimé en cellules par secondes, et le paramètre MBL, abréviation anglo-saxonne pour "Maximum Burst Lenght", exprimé en cellules définissant la longueur maximale d'une rafale de cellules II est connu du document 'A Spacer-Multiplexer for Public UNIs', P. Boyer & M. Servel, communiqué lors d'un congrès «ISS'95, World Télécommunications congress » un dispositif qui concentre des liens issus d'utilisateurs en un nombre réduit de liens haut débit dirigés vers un réseau public. Du coté utilisateur, ce dispositif réalise de la police d'accès et du côté réseau il réalise du lissage. La fonction de lissage espace les cellules provenant des utilisateurs par rapport au débit crête uniquement. Elle ne prend pas en compte les diverses qualités de service telles que CBR, VBR et UBR, abréviation de Undefined Bit Rate. Le dispositif est connecté en sortie à un seul réseau.

Une source ATM multiplexe des trafics de diverses natures. Les solutions actuelles ne permettent pas un lissage des trafics de natures diverses pour les rendre conformes au contrat négocié avec un réseau destinataire gérant un profil normalisé de trafic. Les profils normalisés sont le profil à débit constant CBR et le profil à débit variable VBR.

La présente invention a pour but de pallier l'inconvénient précité.

A cet effet, l'invention a pour objet un procédé d'espacement de cellules ATM transitant dans un commutateur ATM et émises par des sources ATM multiplexant des profils divers à destination d'un ou plusieurs réseaux de débit déterminé, caractérisé en ce qu'il consiste :

- à agréger les sources émettant des cellules à destination d'un même réseau et à donner aux sources un profil global normalisé CBR ou VBR, les sources étant affectées d'une priorité déterminée,
- à prendre en compte les priorités de chacune des sources pour permettre des qualités de service déterminées,
- à combiner des sources multiplexant des profils CBR et VBR pour obtenir une source ayant un profil globalement VBR ou CBR, tout en préservant les caractéristiques des sources à profil CBR dans le cas d'un profil globalement VBR,
- à partager la bande passante du lien physique supportant les flux de cellules sortantes, entre les profils VBR et CBR, et à allouer le reste de la bande passante non consommée par les précédents profils VBR et CBR, à des sources dites complémentaires de profil UBR, abréviation anglo-saxonne pour Undefined Bit Rate, et
- à adapter le débit des sources de profil globalement VBR ou CBR au débit d'un lien physique déterminé par lequel les cellules sortantes doivent transiter pour accéder à un réseau déterminé.

L'invention a pour avantages de garantir une qualité de service malgré des sources de moindre qualité, et de prendre en compte des liens de profil et de débit différents.

D'autres avantages et caractéristiques de la présente invention apparaîtront plus clairement à la lecture de la description qui suit et des figures annexées qui représentent :

- la figure 1, les principales étapes du procédé d'espacement de cellules ATM selon l'invention,
- la figure 2, un schéma du processus de préservation de la composante CBR,
- la figure 3, le principe d'allocation de la bande passante d'un lien aux différents trafics CBR, VBR et UBR,
- la figure 4, un schéma fonctionnel d'un dispositif d'espacement pour la mise en oeuvre du procédé selon l'invention,
- la figure 5, les relations entre les composantes VBR, CBR et UBR d'un dispositif selon l'invention et les caractéristiques des dispositifs d'espacement élémentaires,
- la figure 6A, un cadencement de rafales de cellules à éviter,
- la figure 6B, un cadencement de rafales de cellules préféré,
- la figure 7, le schéma synoptique de l'algorithme CGRA selon la Recommandation I.371 de l'UIT-T, et
- la figure 8, les trois cas possibles A, B et C de l'algorithme CGRA représentés temporellement.

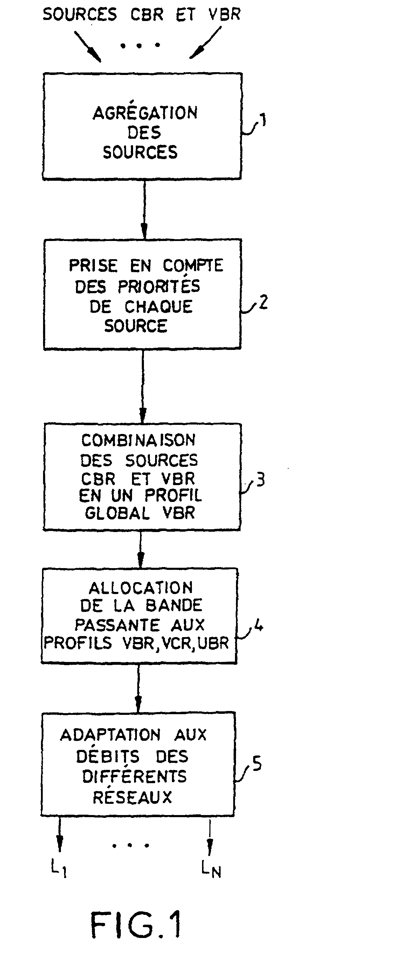

Les principales étapes du procédé selon l'invention sont illustrées par le bloc diagramme de la figure 1.
Le procédé selon l'invention consiste :

- dans une première étape 1, à agréger des sources de profil différent, en leur donnant un profil normalisé CBR ou VBR,
- dans une deuxième étape 2, à prendre en compte les priorités de chacune des sources pour offrir des qualités de service déterminées,
- dans une troisième étape 3, à combiner des sources à profil CBR et VBR en une source ayant un profil global CBR ou VBR tout en préservant les caractéristiques des sources CBR, dans le cas d'un profil global VBR,
- dans une quatrième étape 4, à allouer une partie de la bande passante non utilisée par les sources CBR et VBR à des sources complémentaires UBR, et
- dans une cinquième étape 5, à adapter les différents débits d'accès des réseaux receveurs de cellules aux débits des différentes sources émettrices de cellules.

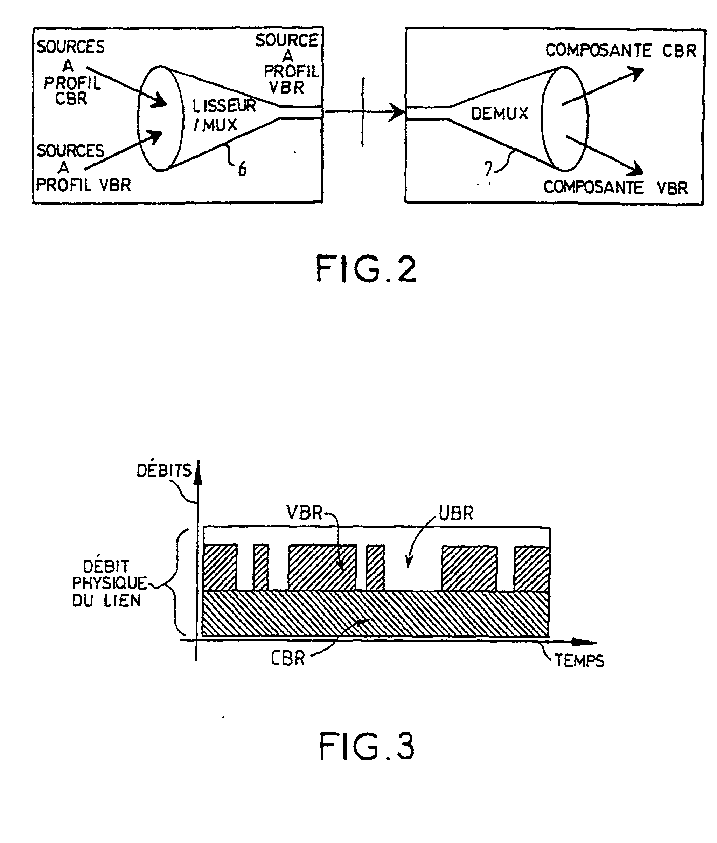

La figure 2 illustre schématiquement le processus de préservation de la composante CBR du procédé selon l'invention.
Les sources de profil respectivement CBR et VBR sont combinées ou multiplexées, puis lissées pour les rendre conformes au contrat négocié avec le réseau destinataire, selon un profil global normalisé soit VBR soit CBR. Cette double fonction lissage/multiplexage est représentée symboliquement par le bloc LISSEUR/MUX 6. Dans le cadre d'un profil global normalisé VBR, le procédé préserve les caractéristiques des composantes CBR tout en assurant la conformité VBR. Le bloc DEMUX 7 symbolise un réseau auquel est connecté le bloc LISSEUR/MUX 6 via son point de raccordement symbolisé par un trait vertical sur la figure 2.
La figure 3 illustre le principe d'allocation de la bande passante d'un lien aux différents trafics de profil CBR, VBR et UBR empruntant ce lien. Ce diagramme représente la répartition des différents débits dans le temps à l'intérieur du débit physique du lien ; le trafic UBR comblant le débit physique du lien laissé disponible par les trafics CBR et VBR.

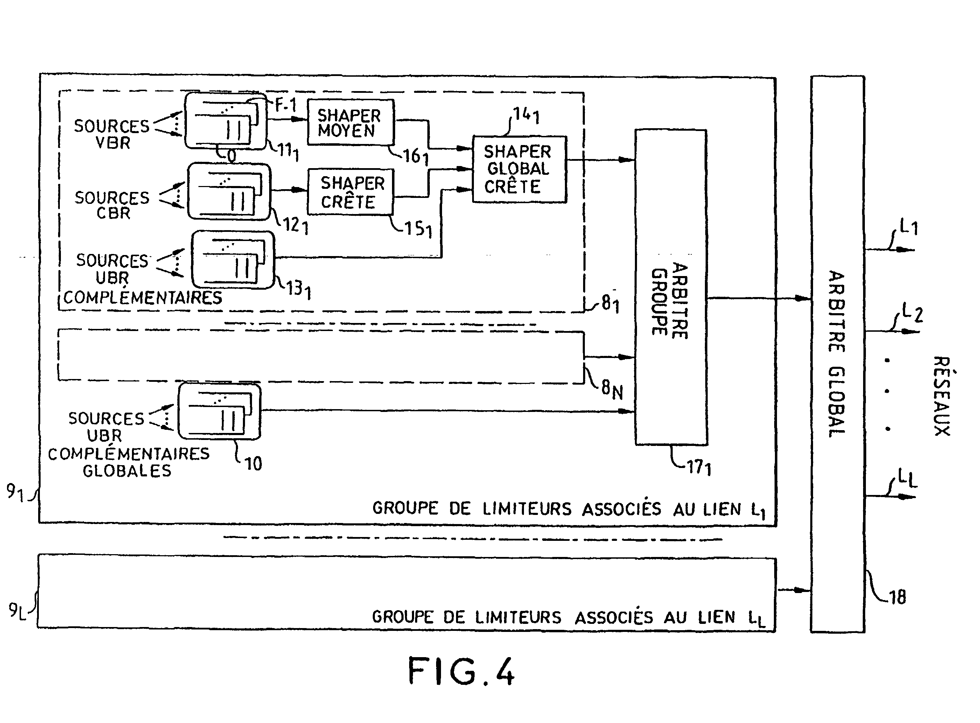

La figure 4 illustre un schéma fonctionnel d'un dispositif d'espacement de cellules ATM pour la mise en oeuvre du procédé selon l'invention.
Le dispositif selon l'invention comporte un nombre déterminé N de limiteurs de cellules $8_1$ à $8_N$, délimités par une ligne fermée discontinue. Chaque limiteur $8_1$ à $8_N$ génère un trafic au profil normalisé CBR ou VBR et dispose d'une bande passante partagée entre des sources CBR et VBR. La bande passante non utilisée par les sources CBR et VBR est utilisée par les sources UBR.
Chaque limiteur $8_1$ à $8_N$ est capable de combiner les sources CBR et VBR en un trafic globalement CBR ou VBR. Dans le second cas, il est capable de préserver les caractéristiques des composantes CBR tout en assurant la conformité VBR.
Les limiteurs générant des cellules destinées à un même réseau sont agrégés en groupes $9i$, délimités par une ligne fermée continue en trait gras, avec $1 \leq i \leq L$, L correspondant au nombre de liens donc de réseaux connectés au dispositif. Chaque groupe $9_1$ à $9_L$ de limiteurs est associé respectivement, via son lien respectif $L_1$ à $L_L$, à un réseau de débit déterminé. Les débits gérés par les limiteurs $8_1$ à $8_N$ de chaque groupe $9_1$ à $9_L$ sont adaptés aux débits des réseaux auxquels ils sont connectés. Au niveau d'un groupe $9_1$ à $9_L$ de limiteurs $8_1$ à $8_N$, la bande passante résiduelle est utilisée par des sources complémentaires globales UBR dont les cellules sont reçues par un ensemble 10 de files d'attente.
Dans chaque groupe $9_1$ à $9_L$ chaque limiteur $8_1$ à $8_N$ voit les sources au travers d'ensemble de files d'attente de cellules ATM, respectivement $11_1$, $12_1$ et $13_1$. Il y a F files d'attente dans chaque ensemble $11_1$, $12_1$ et $13_1$ ; chaque file d'attente correspondant à une source. Les files sont hiérarchisées selon une priorité décroissante, par les limiteurs $8_1$ à $8_N$. Chaque file porte un numéro, de 0 à F-1. La file 0 est la plus prioritaire.
Chaque limiteur $8_1$ à $8_N$ livre des cellules ATM avec un profil normalisé VBR ou CBR, dont les caractéristiques sont exprimées par trois paramètres PCRg, SCRg, MBLg (l'indice g signifiant global). Pour pouvoir préserver les caractéristiques des composantes CBR dans les flux de cellules sortants de profil VBR. chaque limiteur $8_1$ à $8_N$ comporte trois dispositifs d'espacement élémentaires ou "shapers" :

- un premier "shaper" PCR global $14_1$ contrôlé au travers du paramètre PCRg qui assure l'espacement sur le débit crête généré par le limiteur $8_1$.

- un deuxième "shaper" PCR $15_1$ contrôlé au travers du paramètre PCRc qui est utilisé pour générer la composante CBR, et
- un troisième "shaper" SCR $16_1$ contrôlé au travers du paramètre PCRv, SCRv, MBLv qui est utilisé pour générer la composante VBR.

Les relations entre les caractéristiques de ces trois "shapers" $14_1$, $15_1$, $16_1$ et celles du limiteur $8_1$ correspondant sont :

$$PCRg = PCRc + PCRv$$

$$SCRg = PCRc + SCRv$$

$$MBLg = \frac{(MBLv - X)}{(1 - X)}, \text{ avec } X = PCRc \cdot \left(\frac{1}{SCRg} - \frac{1}{PCRg}\right)$$

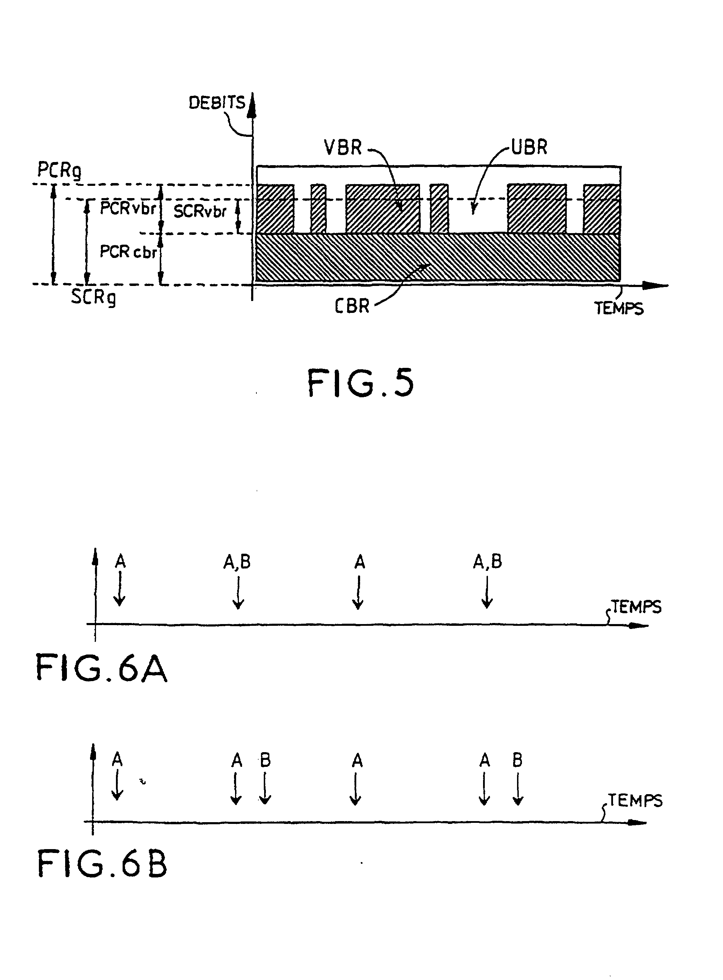

La figure 5, s'appuyant sur la figure 3, illustre les relations entre les composantes VBR, CBR, UBR d'un limiteur $8_1$ et les caractéristiques des trois "shapers" $14_1$, $15_1$ et $16_1$.

Un algorithme d'arbitrage est activé chaque fois qu'au moins un lien destinataire $L_1$ à $L_L$ est prêt à recevoir une carrure. Cet algorithme est mis en oeuvre par un ou plusieurs processeurs symbolisés sur la figure 4 par un bloc arbitre groupe, $17_1$, couplé en sortie des lîmîteurs $8_1$ à $8_N$ du groupe $9_1$ et en sortie de l'ensemble 10 de files d'attente dédiées aux sources complémentaires UBR, et par un bloc arbitre global 18 couplé en sortie de chaque groupe $9_1$ à $9_L$. Ces deux types de blocs respectivement, $17_1$ à $17_L$ et 18, permettent de sélectionner une file d'attente d'où sera extraite une cellule, parmi toutes les files gérées par les limiteurs $8_1$ à $8_N$ de chaque groupe $9_1$ à $9_L$.

Cet algorithme comporte quatre étapes détaillées ci-après :

Dans une première étape, il consiste à déterminer la file d'attente 0 à F-1 à servir, pour chacun des ensembles $11_1$, $12_1$ et $13_1$ de files d'attente F.

Au plus bas niveau, c'est-à-dire pour chaque ensemble $11_1$, $12_1$ et $13_1$ de files d'attente F, la file d'attente à servir est la file non vide de priorité la plus élevée.

Dans une deuxième étape, il consiste à déterminer le limiteur éligible $8_1$ à $8_N$, pour chacun des groupes de limiteurs $9_1$ à $9_L$. Le choix se fait parmi les limiteurs $8_1$ à $8_N$, remplissant les conditions suivantes :

Le "shaper" PCR global $14_1$ est OK

    <et> (le "shaper" PCR $15_1$ est OK <et> l'une des files CBR $12_1$ ou VBR $11_1$ ou UBR 10 est non vide)

    <ou> (le "shaper" SCR $16_1$ est OK <et> l'une des files VBR $11_1$ ou UBR 10 est non vide.

    <ou> (l'une des files UBR 10 est non vide).

Quand un "shaper" est dit OK, cela signifie que pour ce "shaper" une cellule peut être émise.

Si plusieurs limiteurs $8_1$ à $8_N$ remplissent ces conditions, l'un d'eux est retenu, soit par priorité fixe, soit par priorité tournante.

Dans une troisième étape, il consiste à déterminer parmi les groupes $9_1$ à $9_L$, celui qui va fournir la prochaine cellule à émettre. Un groupe $9_1$ à 9L est éligible s'il remplit les deux conditions suivantes :

- le lien associé (lien $L_1$ à $L_L$) est capable de recevoir une cellule, et
- le groupe $9_1$ à $9_L$ a une cellule à émettre, c'est-à-dire que l'un des limiteurs $8_1$ à $8_N$ a été élu, ou alors l'une des files UBR 10 complémentaire globale du groupe est non vide. Dans le premier cas, le groupe est dit éligible niveau 0, dans le second il est dit éligible niveau 1. Le niveau 1 est moins prioritaire que le niveau 0.

Si plusieurs groupes sont éligibles, l'un deux est retenu, soit par priorité fixe. soit par priorité tournante. Le groupe élu utilise le niveau d'éligibilité pour sélectionner soit l'un des limiteurs $8_1$ à $8_N$ soit l'une des files UBR 10.

Dans une quatrième et dernière étape, il consiste à extraire et émettre une carrure si un groupe a été retenu. Les lignes de programmation en langage clair, correspondant à cette quatrième étape sont données ci-après.

```
/SI/ le groupe est éligible niveau 1

/ALORS/

        extraire une cellule de l'ensemble des files UBR complémentaire globale

/SINON/

        pour le limiteur retenu :

        /SI/ le "shaper" CBR est OK

        /ALORS/

        /SI/ au moins l'une des files CBR est non vide

        /ALORS/

                extraire une cellule CBR

        /SINON SI/ au moins l'une des files CBR est non vide

        /ALORS/

                extraire une cellule VBR sans toucher aux ressources du "shaper" VBR

        /SINON SI/ au moins l'une des files UBR est non vide

        /ALORS/

                extraire une cellule UBR

        /FIN SI/

        /SINON SI/le "shaper" VBR est OK

        /ALORS/

        /SI/ au moins l'une des files VBR est non vide

        /ALORS/

                extraire une cellule VBR, mettre à jour les ressources du "shaper" VBR

        /SINON SI/ au moins l'une des files UBR est non vide

        /ALORS/

                extraire une cellule UBR

        /FIN SI/

/SINON/




                extraire une cellule UBR

                /FIN SI/

                /FIN SI/
```

Les "shapers" PCR $15_1$ destinés à générer des débits crête sont réalisés à partir de dispositifs de minuterie appelés ci-après "timers". La valeur de chargement du "timer", c'est-à-dire l'intervalle de temps de décomptage est égal à la période du flux CBR à générer, self 1/PCR.

Deux options pour le redémarrage du "timer" après la fin du décomptage appelé ci-après "timeout" sont possibles : soit le "timer" est relancé dès le "timeout", soit il est relancé lorsqu'une cellule est effectivement extraite du "shaper".

La figure 6A illustre un cadencement à éviter et la figure 6B le cadencement préféré.

Pour limiter les rafales A, B de "timeout" sur plusieurs "shapers" PCR fonctionnant simultanément à des fréquences dans des rapports entiers, les rafales sont avantageusement déphasées comme illustré à la figure 6B.

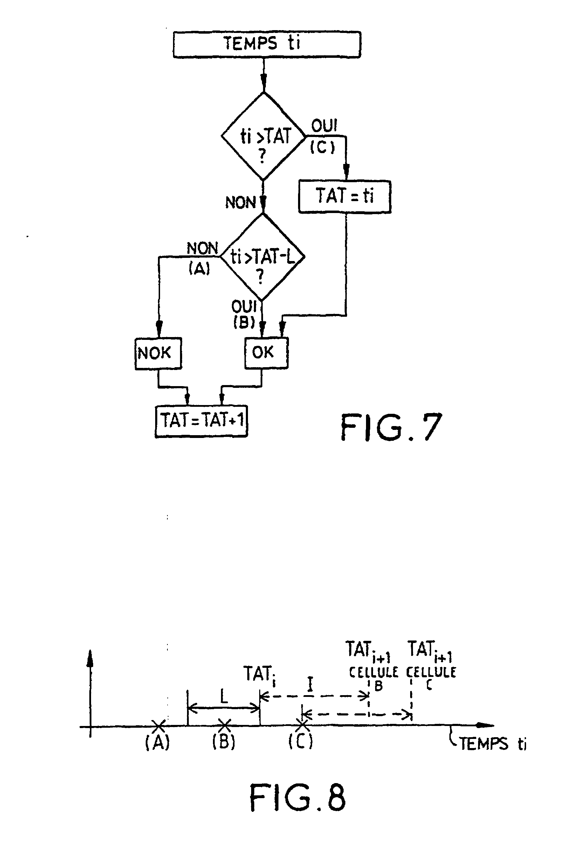

Les "shapers" SCR $16_1$ destinés à générer des débits moyens sont réalisés à partir de l'algorithme GCRA. Ce dernier est illustré par le schéma synoptique de la figure 7.

Cet algorithme se traduit temporellement par le diagramme de la figure 8 où figurent trois cas possibles d'instants d'arrivée des cellules, respectivement repérés A, B et C sur les figures 7 et 8.

Dans cet algorithme, une valeur de référence est définie, appelée $TAT_i$, abréviation anglo-saxonne pour "Theorical Arrivai Time", et où ti correspond à une valeur courante de l'instant d'arrivée d'une cellule. A ce temps d'arrivé théorique $TAT_i$ est associée une limite ou plage de tolérance L Dans le cas correspondant à l'instant d'arrivée A, la cellule arrive avant le $TAT_i$ et est, de plus en dehors de la limite L. Dans ce cas, la cellule est rejetée.

Dans le cas correspondant à l'instant théorique d'arrivée B, la cellule arrive avant l'instant $TAT_i$ mais à l'intérieur de la plage de tolérance L Elle est donc considérée comme conforme et est donc conservée. L'algorithme calcule alors le temps théorique d'arrivée de la prochaine cellule, c'est-à-dire le paramètre d'incrémentation I. Le nouveau temps théorique d'arrivée s'écrivant alors $TAT_{i+1} = TAT_i + I$ et l'algorithme se met alors en attente d'une nouvelle cellule.

Dans le cas correspondant à l'instant d'arrivée C, la cellule arrive après le temps théorique d'arrivée $TAT_i$ et en-dehors de la plage de tolérance L.

Le temps théorique d'arrivée suivant va être alors calculé non plus en partant du temps théorique $TAT_i$ mais en partant de l'instant d'arrivée C. Dans ce dernier cas, il se produit un décalage.

Les valeurs de la limite L et de l'incrément I sont calculés à partir des paramètres PCRv, SCRv et MLBv correspondant au profil VBR selon les relations suivantes :

$$I_{SCR} = \frac{1}{SCRv}$$

$$L_{SCR} = (MBLv - 1) \cdot \left( \frac{1}{SCRv} - \frac{1}{PCRv} \right)$$

## Revendications

**1.** Procédé d'espacement de cellules ATM transitant dans un commutateur ATM et émises par des sources ATM multiplexant des profils divers à destination d'un ou plusieurs réseaux de débit déterminé, **caractérisé en ce qu'**il consiste:

- à agréger (1) les sources émettant des cellules à destination d'un même réseau et à donner aux sources un profil global normalisé du type à débit constant CBR ou du type à débit variable VBR, les sources étant affectées d'une priorité déterminée,
- à prendre en compte (2) les priorités de chacune des sources pour permettre des qualités de service déterminées,
- à combiner (3) des sources multiplexant des profils CBR et VBR pour obtenir une source ayant un profil globalement VBR ou CBR, tout en préservant les caractéristiques des sources à profil CBR dans le cas d'un profil globalement VBR,
- à partager (4) la bande passante du lien physique supportant les flux de cellules sortantes, entre les profils VBR et CBR, et à allouer le reste de la bande passante non consommée par les précédents profils VBR et CBR, à des sources dites complémentaires de profil à débit indéfini UBR, et
- à adapter (5) le débit des sources de profil globalement VBR ou CBR au débit d'un lien physique déterminé par lequel les cellules sortantes doivent transiter pour accéder à un réseau déterminé.

**2.** Dispositif d'espacement de cellules ATM pour la mise en oeuvre du procédé selon la revendication 1, **caractérisé en ce qu'**il comporte un nombre déterminé de groupes ($9_1$ à $9_L$) de limiteurs, fonction du nombre de liens physiques ($L_1$ à $L_L$) supportant des échanges de cellules entre le dispositif d'espacement et des réseaux de débits divers auxquels il est connecté, chaque groupe ($9_1$ à $9_L$) regroupant un nombre déterminé de limiteurs ($8_1$ à $8_N$) servant un même réseau, chaque limiteur ($8_1$) comportant :

- un premier ensemble ($11_1$) de files d'attente recevant des cellules émises par des sources de profil VBR,
- un deuxième ensemble ($12_1$) de files d'attente recevant des cellules émises par des sources de profil CBR,

- un troisième ensemble ($13_1$) de files d'attente recevant des cellules émises par des sources complémentaires de profil UBR,
- un premier dispositif élémentaire ($16_1$) d'espacement du débit moyen couplé en sortie du premier ensemble ($11_1$) de files d'attente,
- un deuxième dispositif élémentaire ($15_1$) d'espacement du débit crête couplé en sortie du deuxième ensemble ($12_1$) de files d'attente,
- un troisième dispositif élémentaire ($14_1$) d'espacement global du débit crête couplé en sortie des premier et deuxième dispositifs élémentaires d'espacement ($16_1$ et $15_1$), et en sortie du troisième ensemble ($13_1$) de files d'attente ;

chaque limiteur ($8_1$ à $8_N$) disposant d'une bande passante partagée entre les sources de profil CBR et VBR, la bande passante non utilisée par les sources de profil CBR et VBR étant utilisée par les sources complémentaires de profil UBR.

et **en ce que** chaque groupe ($9_1$ à $9_L$) comporte :

- un quatrième ensemble (10) de files d'attente recevant des cellules émises par des sources complémentaires globales de profil UBR, et
- un bloc d'arbitrage ($17_1$) couplé en sortie des limiteurs ($8_1$ à $8_N$) et du quatrième ensemble (10) de files d'attente,

et **en ce que** le dispositif d'espacement comporte un bloc d'arbitrage global (18) couplé en sortie des blocs d'arbitrage ($17_1$ à $17_L$) de chaque groupe ($9_1$ à $9_L$) de limiteurs, les sorties du bloc d'arbitrage global (18) étant couplées respectivement aux liens physiques ($L_1$ à $L_L$) avec les réseaux.

**3.** Dispositif selon la revendication 2, **caractérisé en ce que** les blocs d'arbitrage ($17_1$ à $17_L$) de chaque groupe ($9_1$ à $9_L$) de limiteurs et le bloc d'arbitrage global (16) mettent en oeuvre un algorithme d'arbitrage consistant à sélectionner une file d'attente déterminée parmi toutes les files d'attente dès qu'un lien physique ($L_1$ à $L_L$) est prêt à recevoir une cellule pour permettre d'adapter le débit des sources de profil globalement VBR ou CBR au débit du lien physique destinataire.

**4.** Dispositif selon l'une quelconque des revendications 2 et 3, **caractérisé en ce que** le premier dispositif élémentaire ($16_1$) d'espacement du débit moyen est basé sur l'algorithme d'espacement virtuel.

**5.** Dispositif selon l'une quelconque des revendications 2 à 4, **caractérisé en ce que** le deuxième dispositif élémentaire ($15_1$) d'espacement du débit crête est basé sur un compteur dont la valeur de chargement est égale à la période du flux de cellules émises selon un profil CBR.

**6.** Dispositif selon la revendication 5, **caractérisé en ce que** le compteur est relancé après la fin du décomptage de la valeur de chargement

**7.** Dispositif selon la revendication 5, **caractérisé en ce que** le compteur est relancé lorsqu'une cellule est effectivement extraite du deuxième dispositif élémentaire ($15_1$) d'espacement.

**Patentansprüche**

**1.** Verfahren zur Glättung eines Stroms von ATM-Zellen, die ein ATM-Schaltorgan durchlaufen und von ATM-Quellen ausgesendet werden, wobei verschiedene Profile in Richtung auf eines oder mehrere Netze eines bestimmten Durchsatzes multiplexiert werden, **dadurch gekennzeichnet; daß** es darin besteht,

- die Zellen mit Zielrichtung zu einem gemeinsamen Netz aussendenden Quellen zusammenzufassen (1) und den Quellen ein genormtes globales Profil vom Typ konstanten Durchsatzes CBR oder variablen Durchsatzes VBR zu verleihen, wobei die Quellen jeweils bestimmte Prioritäten besitzen,
- die Prioritäten jeder der Quellen zu berücksichtigen (2), um bestimmte Service-Qualitäten zu erreichen,
- Quellen, die Profile CBR und VBR multiplexieren, zu kombinieren (3), um eine Quelle mit einem globalen Profil VBR oder CBR zu erhalten und doch die Merkmale von Quellen mit dem Profil CBR für den Fall eines globalen Profils VBR zu bewahren,
- das Durchlaßband der den Fluß der ausgehenden Zellen übertragenden physischen Verbindung zwischen den Profilen VBR und CBR aufzuteilen (4) und den nicht durch die erwähnten Profile VBR und CBR verbrauchten Rest des Durchlaßbands den sogenannten komplementären Quellen des Profils UBR mit undefiniertem Durchsatz zuzuteilen,

- und den Durchsatz der Quellen mit dem globalen Profil VBR oder CBR an den Durchsatz einer bestimmten physischen Verbindung anzupassen (5), über die die ausgehenden Zellen in Richtung auf ein bestimmtes Netz verlaufen sollen.

2. Vorrichtung zur Glättung des Stroms von ATM-Zellen zur Durchführung des Verfahrens nach Anspruch 1, **dadurch gekennzeichnet**,

\* daß es eine bestimmte Anzahl von Gruppen ($9_1$ bis $9_L$) von Begrenzern abhängig von der Zahl der physischen Verbindungen ($L_1$ bis $L_L$) besitzt, die den Austausch von Zellen zwischen der Glättungsvorrichtung und an diese angeschlossenen Netzen unterschiedlicher Durchsätze bewirken, wobei jede Gruppe ($9_1$ bis $9_L$) eine bestimmte Anzahl von Begrenzern ($8_1$ bis $8_N$) zur Bedienung eines gleichen Netzes enthält und jeder Begrenzer ($8_1$) aufweist:

- eine erste Einheit ($11_1$) von Warteschlangen, die von den Quellen mit Profil VBR ausgesendeten Zellen empfangen,
- eine zweite Einheit ($12_1$) von Warteschlangen, die von Quellen mit Profil CBR ausgesendete Zellen empfangen,
- eine dritte Einheit ($13_1$) von Warteschlangen, die von komplementären Quellen mit Profil UBR ausgesendete Zellen empfangen,
- eine erste elementare Glättungsvorrichtung ($16_1$) für den mittleren Durchsatz, die an den Ausgang der ersten Einheit ($11_1$) von Warteschlangen gekoppelt ist,
- eine zweite elementare Glättungsvorrichtung ($15_1$) für den maximalen Durchsatz, die an den Ausgang der zweiten Einheit ($12_1$) von Warteschlangen gekoppelt ist,
- eine dritte elementare, globale Glättungsvorrichtung ($14_1$) für den maximalen Durchsatz, die an den Ausgang der ersten und der zweiten elementaren Glättungsvorrichtungen ($16_1$ und $15_1$) und an den Ausgang der dritten Einheit ($13_1$) von Warteschlangen gekoppelt ist,

wobei jeder Begrenzer ($8_1$ bis $8_N$) ein Durchlaßband besitzt, das unter den Quellen mit Profil VBR und VBR aufgeteilt wird, während das von den Quellen mit Profil CBR und VBR nicht benutzte Durchlaßband von den komplementären Quellen mit Profil UBR benutzt wird,

\* daß jede Gruppe ($9_1$ bis $9_L$) aufweist:

- eine vierte Einheit (10) von Warteschlangen, die von globalen komplementären Quellen mit Profil UBR ausgesendete Zellen empfängt,
- und einen Arbitrageblock ($17_1$), der an den Ausgang der Begrenzer ($8_1$ bis $8_N$) und der vierten Einheit von Warteschlangen (10) gekoppelt ist,

\* und daß die Glättungsvorrichtung einen globalen Arbitrageblock (18) enthält, der an den Ausgang der Arbitrageblöcke ($17_1$ bis $17_L$) jeder Gruppe ($9_1$ bis $9_L$) von Begrenzern gekoppelt ist, während die Ausgänge des globalen Arbitrageblocks (18) an die jeweiligen physischen Verbindungen ($L_1$ bis $L_L$) mit den Netzen gekoppelt sind.

3. Vorrichtung nach Anspruch 2, **dadurch gekennzeichnet, daß** die Arbitrageblöcke ($17_1$ bis $17_L$) jeder Gruppe ($9_1$ bis $9_L$) von Begrenzern und der globale Arbitrageblock (18) einen Arbitrage-Algorithmus realisieren, der darin besteht, eine bestimmte Warteschlange unter allen Warteschlangen auszuwählen, sobald eine physische Verbindung ($L_1$ bis $L_L$) zum Empfang einer Zelle bereit ist, um den Durchsatz der Quellen mit globalem Profil VBR oder CBR an den Durchsatz der physischen Zielverbindung anpassen zu können.

4. Vorrichtung nach einem beliebigen der Ansprüche 2 und 3, **dadurch gekennzeichnet, daß** die erste elementare Glättungsvorrichtung ($16_1$) des mittleren Durchsatzes auf dem virtuellen Glättungsalgorithmus beruht.

5. Vorrichtung nach einem beliebigen der Ansprüche 2 bis 4, **dadurch gekennzeichnet, daß** die zweite elementare Glättungsvorrichtung ($15_1$) des maximalen Durchsatzes auf einem Zähler fußt, dessen Startzählwert der Periode des Flusses von Zellen gleicht, die gemäß einem Profil CBR ausgesendet werden.

6. Vorrichtung nach Anspruch 5, **dadurch gekennzeichnet, daß** der Zähler nach dem Ende des vom Startzählwert ausgehenden Rückwärtszählens neu gestartet wird.

7. Vorrichtung nach Anspruch 5, **dadurch gekennzeichnet, daß** der Zähler neu gestartet wird, wenn eine Zelle tatsächlich aus der zweiten elementaren Glättungsvorrichtung ($15_1$) entnommen wird.

**Claims**

1. Process for spacing ATM cells travelling through an ATM switch and emitted by ATM sources multiplexing diverse profiles destined for one or more networks of specified bit rate, **characterized in that** it consists:

   - in aggregating (1) the sources emitting cells destined for the same network and in giving the sources a standardized global profile of the type with constant bit rate CBR or of the type with variable bit rate VBR, the sources being assigned a specified priority,
   - in taking into account (2) the priorities of each of the sources so as to allow specified qualities of service,
   - in combining (3) sources multiplexing CBR and VBR profiles so as to obtain a source having a globally VBR or CBR profile, whilst also preserving the characteristics of the sources with CBR profile in the case of a globally VBR profile,
   - in sharing (4) the passband of the physical link supporting the streams of outgoing cells, between the VBR and CBR profiles, and in allotting the remainder of the passband which is not used up by the above VBR and CBR profiles to so-called complementary sources of undefined bit rate profile UBR, and
   - in adapting (5) the bit rate of the sources with globally VBR or CBR profile to the bit rate of a specified physical link through which the outgoing cells must travel in order to access a specified network.

2. Device for spacing ATM cells for implementing the process according to Claim 1, **characterized in that** it comprises a specified number of groups ($9_1$ to $9_L$) of limiters, dependent on the number of physical links ($L_1$ to $L_L$) supporting exchanges of cells between the spacing device and networks of diverse bit rates to which it is connected, each group ($9_1$ to $9_L$) grouping together a specified number of limiters ($8_1$ to $8_N$) serving the same network, each limiter ($8_1$) comprising:

   - a first set ($11_1$) of queues receiving cells emitted by sources of VBR profile,
   - a second set ($12_1$) of queues receiving cells emitted by sources of CBR profile,
   - a third set ($13_1$) of queues receiving cells emitted by complementary sources of UBR profile,
   - a first elementary device ($16_1$) for spacing the mean bit rate coupled to the output of the first set ($11_1$) of queues,
   - a second elementary device ($15_1$) for spacing the mean bit rate coupled to the output of the second set ($12_1$) of queues,
   - a third elementary device ($14_1$) for the global spacing of the peak bit rate coupled to the output of the first and second elementary spacing devices ($16_1$ and $15_1$), and to the output of the third set ($13_1$) of queues;

   each limiter ($8_1$ to $8_N$) having a passband shared between the sources of CBR and VBR profile, the passband which is not used by the sources of CBR and VBR profile being used by the complementary sources of UBR profile, and **in that** each group ($9_1$ to $9_L$) comprises:

   - a fourth set (10) of queues receiving cells emitted by global complementary sources of UBR profile, and
   - an arbitration block ($17_1$) coupled to the output of the limiters ($8_1$ to $8_N$) and of the fourth set (10) of queues,

   and **in that** the spacing device comprises a global arbitration block (18) coupled to the output of the arbitration blocks ($17_1$ to $17_L$) of each group ($9_1$ to $9_L$) of limiters, the outputs of the global arbitration block (18) being coupled respectively to the physical links ($L_1$ to $L_L$) with the networks.

3. Device according to Claim 2, **characterized in that** the arbitration blocks ($17_1$ to $17_L$) of each group ($9_1$ to $9_L$) of limiters and the global arbitration block (18 ) implement an arbitration algorithm consisting in selecting a specified queue from among all the queues as soon as a physical link ($L_1$ to $L_L$) is ready to receive a cell so as to allow the bit rate of the sources of globally VBR or CBR profile to be adapted to the bit rate of the destination physical link.

4. Device according to any one of Claims 2 and 3, **characterized in that** the first elementary device ($16_1$) for spacing the mean bit rate is based on the virtual spacing algorithm.

5. Device according to any one of Claims 2 to 4, **characterized in that** the second elementary device ($15_1$) for spacing the peak bit rate is based on a counter whose loading value is equal to the period of the stream of cells emitted according to a CBR profile.

6. Device according to Claim 5, **characterized in that** the counter is restarted after the end of the countdown of the loading value.

7. Device according to Claim 5, **characterized in that** the counter is restarted when a cell is actually extracted from the second elementary spacing device ($15_1$).

SOURCES CBR ET VBR

| AGRÉGATION DES SOURCES | 1 |

| PRISE EN COMPTE DES PRIORITÉS DE CHAQUE SOURCE | 2 |

| COMBINAISON DES SOURCES CBR ET VBR EN UN PROFIL GLOBAL VBR | 3 |

| ALLOCATION DE LA BANDE PASSANTE AUX PROFILS VBR,VCR,UBR | 4 |

| ADAPTATION AUX DÉBITS DES DIFFÉRENTS RÉSEAUX | 5 |

$L_1$ · · · $L_N$

# FIG.1

# FIG.2

# FIG.3

FIG.4

EP 0 885 508 B1

FIG.5

FIG.6A

FIG.6B

FIG.7

FIG.8